(19) Europäisches Patentamt

European Patent Office

Office européen des brevets

(11) Veröffentlichungsnummer: **0 264 767 B1**

# (12) EUROPÄISCHE PATENTSCHRIFT

(45) Veröffentlichungstag der Patentschrift: **15.07.92**

(21) Anmeldenummer: **87114889.6**

(22) Anmeldetag: **13.10.87**

(51) Int. Cl.⁵: **H02G 1/08**

(54) Verfahren und Vorrichtung zum Einbringen eines seilartigen Elements in ein Kabelkanalrohr.

(30) Priorität: **15.10.86 DE 3635041**

(43) Veröffentlichungstag der Anmeldung:
**27.04.88 Patentblatt 88/17**

(45) Bekanntmachung des Hinweises auf die
Patenterteilung:
**15.07.92 Patentblatt 92/29**

(84) Benannte Vertragsstaaten:
**DE FR GB IT**

(56) Entgegenhaltungen:
**EP-A- 0 135 132**
**DE-A- 2 330 844**
**GB-A- 2 190 457**
**US-A- 4 332 436**

(73) Patentinhaber: **Harmstorf, Rudolf**
**Kösterbergstrasse 40F**
**W-2000 Hamburg 55(DE)**

(72) Erfinder: **Harmstorf, Rudolf**
**Kösterbergstrasse 40F**
**W-2000 Hamburg 55(DE)**

(74) Vertreter: **Dipl.-Ing. H. Hauck, Dipl.-Ing. E.**
**Graalfs, Dipl.-Ing. W. Wehnert, Dr.-Ing. W. Dö-**
**ring**
**Neuer Wall 41**
**W-2000 Hamburg 36(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren nach dem Oberbegriff des Anspruchs 1.

Es ist beim Verlegen von Unterwasserkabeln bekannt, zunächst ein Kabelkanalrohr zu verlegen und durch dieses dann zuerst ein dünnes Hilfsseil und danach mit dem Hilfsseil das Kabel einzuziehen. Erforderlichenfalls können auch mehrere Hilfsseile zunehmender Dicke und Zugfestigkeit nacheinander eingezogen werden. Das Kabelkanalrohr muß zur Verringerung des Auftriebes spätestens beim Verlegen mit Wasser gefüllt werden. Es ist auch bekannt, daß ein Hilfsseil vor dem Verlegen des Kabelkanalrohres bereits eingebracht ist.

Bei großen zusammenhängenden Rohrlängen, wie sie z.B. bei der Durchquerung von natürlichen Gewässern oft erforderlich oder zweckmäßig sind, müssen zum Einziehen von Hilfsseilen oder des Kabels trotz der Schmierung durch die Wasserfüllung sehr erhebliche Kräfte angewandt werden, insbesondere wenn mehrere Bögen oder Radien durch das Querprofil des Flußbettes entstehen. Es hat sich gezeigt, daß zum Beispiel schon bei einer zusammenhängenden Rohrlänge von 3 km ein 5 mm dickes Nylon-Hilfsseil in der Regel reißt, wenn mit ihm ein weiteres Seil oder das Kabel eingezogen werden soll.

Aus US-A-4 332 436 ist bekanntgeworden, bei der Herstellung von Glasfaserkabeln die Glasfasern mit Hilfe von Wasser in das aufnehmende Umhüllungsrohr einzuführen. Aus der EP-A-0 135 132 ist bekanntgeworden, ein Lichtleiterkabel in einem konventionellen Kabel zu integrieren und ein Leerrohr in das Hauptkabel einzubringen, in den die Glasfasern eingezogen werden, und zwar ebenfalls mit Hilfe eines Strömungsmediums.

Aus der DE-A-23 30 844 ist bekanntgeworden, Kabel in Kanalrohre mit Hilfe eines Zugseils einzuführen und am Seil Abstandshalter anzuordnen, die eine Berührung des Kabels mit der Kanalrohrwandung verhindern sollen.

Der Erfindung liegt die Aufgabe zugrunde, ein Verfahren anzugeben, mit welchem in einfacher und betriebssicherer Weise insbesondere Unterwasserkabel in ein mit Wasser gefülltes Kabelkanalrohr eingebracht werden können.

Diese Aufgabe wird gelöst durch die Merkmale des Patentanspruchs 1.

Bei dem erfindungsgemäßen Verfahren wird Wasser nicht nur als Schmiermittel, sondern auch als reibendes Antriebsmedium verwendet, wobei die Antriebskraft um so größer ist, je länger das Kabelkanalrohr ist. Durch die Relativgeschwindigkeit zwischen Wasserströmung und angetriebenem Kabel und Wand des Kabelkanalrohrs wird eine im Vergleich zu stehendem Wasser erheblich bessere Schmierwirkung zwischen dem Kabel und dem Kanalrohr erhalten, so daß die Reibungskräfte zwischen dem Kabel und dem Kabelkanalrohr erheblich kleiner sind als die Antriebskraft, die von der Wasserströmung durch Reibung auf das Element ausgeübt wird. Die für den Wasserstrom aufzubringende Förderleistung wird im wesentlichen durch die Reibung zwischen dem Wasserstrom und dem Kabelkanalrohr bestimmt und kann bequem mit einer entsprechend starken Pumpe aufgebracht werden. Zum Beispiel kann mit einer Pumpe einer Förderleistung von 50 kW bei 10 bar Überdruck ohne weiteres ein 10 mm dickes Kabel durch ein 3,5 km langes Kunststoffkanalrohr von 70 mm inneren Durchmessers eingebracht werden.

Das erfindungsgemäße Verfahren ermöglicht mithin das Einziehen von Kabeln, deren spezifisches Gewicht deutlich höher ist als das von Wasser.

Die an dem Kabel anzubringenden Schwimmkörper dienen dazu, das Kabel im Kanalrohr mehr oder weniger schwimmend zu führen, damit eine Wandreibung vermieden wird. Die Schwimmkörper haben indessen einen Durchmesser, der geringer ist als der Innendurchmesser des Kanalrohrs, so daß die Schwimmkörper nicht als kolbenartige Vortriebskörper dienen, vielmehr wird der Vortrieb nahezu ausschließlich über die Reibung der Strömung mit dem Kabel erzielt.

Die Einführung des antreibenden Wasserstroms kann durch ein an das Kabelkanalrohr angesetztes Ansatzrohr erfolgen, durch welches auch das einzubringende Kabel gemäß einer Ausgestaltung der Erfindung über eine Ringdichtung eingeführt werden kann. Erforderlichenfalls kann die Reibung in der Ringdichtung durch eine auf das Kabel einwirkende zusätzliche Förderkraft zumindest teilweise überwunden werden, zum Beispiel mittels auf dem Kabel laufender Antriebsrollen.

Um eine zentrierende Wirkung auf das Kabel im Kabelkanalrohr zu verbessern, sieht eine Ausgestaltung der Erfindung vor, daß der Wasserstrom annähernd gleichmäßig um den Umfang des Kabels herum in das Kabelkanalrohr eingeleitet wird. Zu diesem Zweck kann beispielsweise am Anfang des Kabelkanalrohrs ein Ringkanal angeordnet werden, der mit in Umfangsrichtung beabstandeten radialen Öffnungen mit dem Inneren des Kabelkanalrohrs in Verbindung steht und der mit einem seitlich abgehenden Wasserzuführrohr verbunden ist. Diese Art der Wasserstromeinleitung führt von vornherein zu einer Zentrierung des Kabels im Kanalrohr. Vorteilhaft ist, wenn die Öffnungen von Düsen gebildet werden, die relativ schräg in Strömungsrichtung weisen.

Wie bereits erwähnt, müssen die Schwimmkörper im Durchmesser deutlich geringer sein als der Innendurchmesser des Kanalrohrs, um die Strömung nicht so stark zu beeinträchtigen. Vorzugsweise ist ihr Durchmesser daher höchstens drei Viertel des Rohrinnendurchmessers. Die Schwimmkörper können aus Kunststoff bestehen und mit mehreren Hohlräumen versehen sein. Sie haben vorzugsweise Kugelgestalt, wobei jedoch auch andere Formen denkbar und zweckmäßig sein können. Die Abstände, in denen die Schwimmkörper am Kabel angebracht werden, hängen vom Gewicht des Kabels sowie vom Verlauf im Kabelkanalrohr ab. Bei einem relativ hohen Gewicht des Kabels und beim mehrfach gekrümmten Kanalrohr sind die Abstände geringer zu wählen als bei geringerem Gewicht des Kabels und relativ geradem Kabelkanalrohr. Zweckmäßige Abstände können zum Beispiel 50 bis 100 m sein.

Zum Einführen des mit den Schwimmkörpern versehenen Kabels ist erfindungsgemäß eine Schleuse vorgesehen, die von zwei beabstandeten Verschlußorganen und einem dazwischen angeordneten Rohr gebildet ist. Die Schließelemente der Verschlußorgane sind so ausgebildet, daß sie in der Schließstellung das Hindurchführen des Kabels erlauben und nur in der Öffnungsstellung den Hindurchtritt der Schwimmkörper ermöglichen. Dadurch wird verhindert, daß beim Einführen des mit einem Schwimmkörper versehenen Kabels zu viel Druckwasser austritt.

Das erfindungsgemäße Verfahren hat den großen Vorteil, daß keine örtlich hohen Zugkräfte das Kabel belasten sowie Anpreßdrücke, die sonst bei hohen Zugkräften in Radien auftreten, vermieden werden. Dies ist vor allen Dingen bei empfindlichen Kabeln von Bedeutung.

Um den Auftrieb des Kabels im Rohr zu erhöhen, kann auch eine Flüssigkeit zum Einschwimmen verwendet werden, die ein höheres spezifisches Gewicht als Wasser aufweist, zum Beispiel eine Salzlösung.

Die Erfindung wird nachfolgend anhand von Ausführungsbeispielen näher erläutert.

Fig. 1     zeigt eine schematische Darstellung eines Endbereichs eines Kabelkanalrohrs und der zum Einziehen eines seilförmigen Elements vorgesehenen Einrichtungen.

Fig. 2     zeigt schematisch eine weitere Ausführungsform einer Vorrichtung zum Einziehen eines seilförmigen Elements.

Fig. 3     zeigt in Seitenansicht und teilweise im Schnitt ein Verschlußorgan für eine Schleuse der Vorrichtung nach Fig. 2.

Fig. 4     zeigt die Vorderansicht eines Verschlußelements des Verschlußorgans nach Fig. 3 in Richtung des Pfeils 4 nach Fig. 3.

Fig. 5     zeigt teilweise im Schnitt eine Ansicht eines kugelförmigen mit dem Element zu verbindenden Körpers.

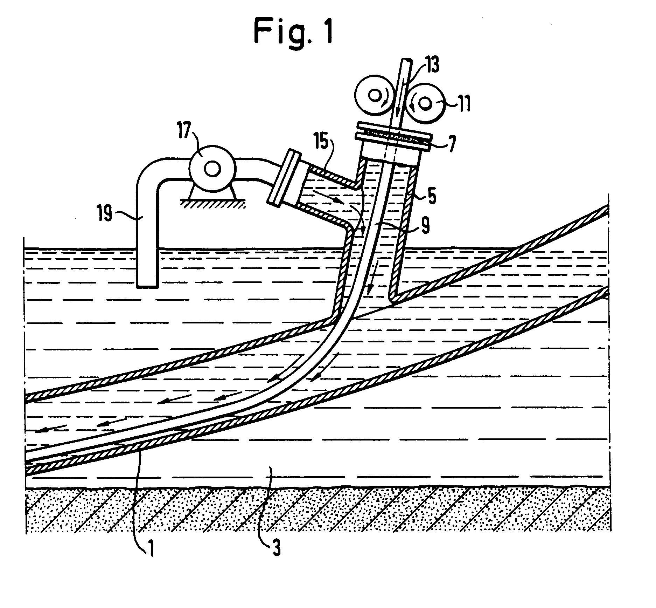

Die Fig. 1 zeigt ein Kabelkanalrohr 1, das in einem Gewässer 3 ausgelegt und mit Wasser gefüllt ist. In vielen Fällen wird ein derartiges Rohr in die Sohle eingebracht. Zur Durchführung des Verfahrens ist an das Kabelkanalrohr 1 an einer leicht zugänglichen Stelle, normalerweise wie dargestellt in einem Endbereich des Kabelkanalrohres 1, ein Ansatzrohr 5 schräg angesetzt worden, das an seinem freien Ende einen Flansch mit einer Ringdichtung 7 aufweist. Das einzuziehende Element 9, beispielsweise ein Kunststoffseil, ist durch die Ringdichtung 7 geführt und wird außerhalb kurz vor der Ringdichtung durch angetriebene Rollen 11 mit einer zusätzlichen Förderkraft 13 beaufschlagt, wobei der Abstand zwischen den Rollen 11 und der Ringdichtung 7 so klein gewählt ist, daß aufgrund der Steifigkeit des Elements 9 ein seitliches Ausweichen durch Verbiegen des Elements 9 ausgeschlossen ist. Durch die zusätzliche Förderkraft 13 wird die in der Ringdichtung 7 auftretende Reibung zumindest teilweise überwunden. Das Ansatzrohr 5 hat einen Stutzen 15, an den eine Wasser-Druckpumpe 17 angeschlossen ist. Bei der dargestellten Ausführungsform wird der Einlaß 19 der Druckpumpe 17 aus dem Gewässer 3 gespeist. In vielen Fällen wird das Wasser auch bestehenden Versorgungsnetzen entnommen.

Es versteht sich, daß das Kabelkanalrohr 1 an seinem (in der Fig. 1 rechts zu denkenden) Ende verschlossen werden muß. Dies ist in Figur 1 nicht dargestellt

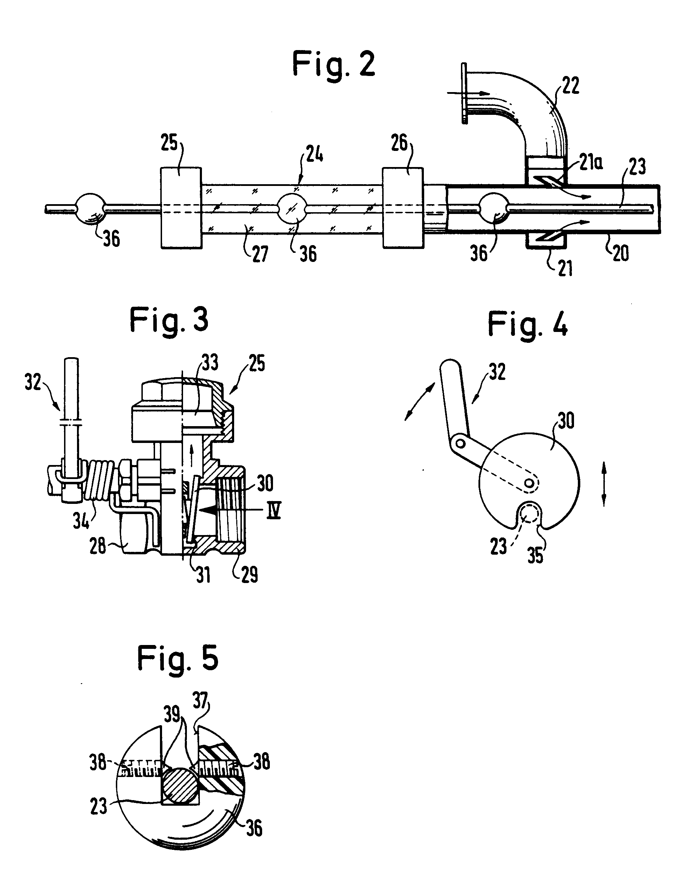

Bei der Ausführungsform nach Fig. 2 ist ein Kabelkanalrohr 20 vorgesehen, das von einem Ringkanal 21 umgeben ist. Der Ringkanal ist über Düsen 21a, die in Umfangsrichtung beabstandet sind, mit dem Inneren des Kabelkanalrohrs 20 verbunden, wobei die Düsen nicht in den Rohrquerschnitt hineinreichen. Die Düsen weisen schräg in Richtung Rohrachse in die Strömungsrichtung. Der Ringkanal 21 ist mit einem seitlich abgehenden Krümmer 22 verbunden, über den Druckwasser zugeführt wird (nicht gezeigt). Die Druckwasserzufuhr kann z.B. in gleicher Weise wie in Fig. 1 gezeigt erfolgen. Das von allen Seiten gleichmäßig in das Kabelkanalrohr 20 einströmende Druckwasser übt einen zentrierenden Effekt auf das Seil oder Glasfaserkabel 23 aus, das auf diese Weise annähernd mittig im Rohr 20 geführt wird.

An das Kabelkanalrohr 20 ist am hinteren Ende eine Schleuse 24 angeschlossen. Sie besteht aus zwei beabstandeten Verschlußorganen 25, 26, zwischen denen ein Verbindungsrohr 27 angeordnet ist, das vorzugsweise aus durchsichtigem Material besteht. Das Verschlußorgan 25 ist in Fig. 3 dargestellt. Es weist einen Eingangsstutzen 28 und einen Ausgangsstutzen 29 auf, zwischen denen ein Verschlußelement 30 in Form einer annähernd kreisförmigen Platte vorgesehen ist, die in der Schließstellung mit einem Dichtsitz 31 zusammenwirkt. Die Platte 30 kann mit Hilfe eines Hebelsystems 32 in einen oberen Aufnahmeraum 33 bewegt werden, so daß ein Durchgang zwischen den Stutzen 28, 29 im vollen Rohrquerschnitt geschaffen ist. Das Hebelgestänge 32 ist mittels einer schraubenlinienförmigen Feder 34 vorgespannt, so daß die Platte 30 automatisch in Schließstellung gelangt, wenn die Betätigung des Hebelgestänges 32 beendet ist.

Wie aus Fig. 4 zu erkennen, weist die Platte 30 im unteren Bereich eine radiale Ausnehmung 35 auf. Ihre Breite ist so bemessen, daß sie das Kabel oder Seil 23 aufnehmen kann, wie in gestrichelten Linien angedeutet.

Wie aus Fig. 2 zu erkennen, sind mit dem Seil oder Kabel 23 Kugeln 36 verbunden. In Fig. 2 sind die Kugeln 36 in verhältnismäßig geringem Abstand gezeichnet. In Wahrheit beträgt dieser Abstand viele Meter, z.B. 50 bis 100 Meter, wobei dieser Abstand davon abhängt, wie schwer das Kabel 23 ist bzw. welchen Verlauf das Kabelkanalrohr 20 aufweist. Die Kugeln 36 können aus schwimmfähigem Material sein bzw. mit Hohlräumen versehen werden, so daß sie das Kabel oder Seil 23 im Rohr 20 schwimmend tragen. Da das Seil 23 ganz oder teilweise durch die Wasserströmung durch das Rohr 20 transportiert wird, müssen die Kugeln 36 einen kleineren Durchmesser als das Rohr 20 aufweisen. In Fig. 2 sind die Kugeln 36 mit verhältnismäßig großem Durchmesser gezeigt. In Wirklichkeit beträgt dieser Durchmesser etwa 75 % des Durchmessers des Rohrs 20.

In Fig. 5 ist eine Kugel 36 aus Kunststoff dargestellt. Man erkennt, daß sie einen durchgehenden radialen Schlitz 37 aufweist, der über die Mitte der Kugel hinausgeht. Er dient zur Aufnahme des Kabels oder Seils 23. Bei vollständiger Aufnahme des Kabels 23 befindet sich dieses annähernd auf einem Durchmesser der Kugel 36. Wie ferner zu erkennen, sind einander gegenüberliegend zwei Madenschrauben 38 in Gewindebohrungen der Kugel 36 eingeschraubt. Sie weisen keilförmige Spitzen 39 auf. Sie dienen zur Festlegung der Kugel 36 auf dem Kabel 23. Die Spitzen 39 können konkav ausgeführt werden, um eine Anpassung an die Oberflächenkontur des Kabels 23 zu erhalten.

Beim Einschleusen des Kabels 23 in das Kabelkanalrohr 20 wird zunächst das Verschlußorgan 25 geöffnet, während das Verschlußorgan 26 geschlossen bleibt. Dadurch kann eine Kugel 36 über das geöffnete Verschlußorgan 25 in das Verbindungsrohr 27 eintreten. Das geschlossene Verstellorgan 26 ermöglicht gleichwohl den Durchtritt des Kabels 23. Befindet sich eine Kugel im Verbindungsrohr 27, wird anschließend das Verschlußorgan 25 geschlossen und das Verschlußorgan 26 geöffnet, so daß die Kugel 36 in das Kabelkanalrohr 20 eintreten kann. Über das durchsichtige Verbindungsrohr 27 kann kontrolliert werden, ob das Kabel 23 von der Ausnehmung 35 in dem Schieber 30 voll aufgenommen ist.

**Patentansprüche**

1. Verfahren zum Einbringen eines Kabels, insbesondere eines Unterwasserkabels in ein Kabelkanalrohr, in dem mit dem Kabel in Abständen Schwimmkörper lösbar verbunden werden, deren Durchmesser kleiner ist als der Innendurchmesser des Kabelkanalrohrs und ein Wasserstrom durch das Kabelkanalrohr geleitet wird, wodurch das Kabel durch Reibung mit dem Wasserstrom durch das Kabelkanalrohr geschwemmt wird.

2. Verfahren nach Anspruch 1, dadurch gekennzeichnet, daß das einzuziehende Kabel durch eine Ringdichtung in den Wasserstrom eingeführt wird.

3. Verfahren nach Anspruch 2, dadurch gekennzeichnet, daß entgegen der von der Ringdichtung hervorgerufenen Reibung eine zusätzliche Förderkraft auf das Element ausgeübt wird.

4. Verfahren nach einem der Ansprüche 1 bis 3, dadurch gekennzeichnet, daß der Wasserstrom annähernd gleichmäßig um den Umfang des Kabels herum in das Kabelkanalrohr eingeleitet wird.

5. Verfahren nach einem der Ansprüche 1 bis 4, dadurch gekennzeichnet, daß kugelförmige Schwimmkörper (36) mit dem Kabel verbunden werden.

6. Verfahren nach Anspruch 5, dadurch gekennzeichnet, daß die kugelförmigen Schwimmkörper eine das Kabel aufnehmende Aussparung aufweisen und mindestens eine Schraube mit ihrem vorderen Ende in die Aussparung hineinverstellbar ist zur Festlegung des Schwimmkörpers am Kabel.

7. Verfahren nach einem der Ansprüche 1 bis 6, dadurch gekennzeichnet, daß die Schwimmkörper aus Kunststoff bestehen.

8. Verfahren nach Anspruch 7, dadurch gekennzeichnet, daß die Schwimmkörper einen oder mehrere Hohlräume aufweisen.

9. Vorrichtung zur Durchführung des Verfahrens nach einem der Ansprüche 1 bis 8, dadurch gekennzeichnet, daß zum Einführen des Kabels (23) mit den Schwimmkörpern (36) dem Kabelkanalrohr (20) eine Schleuse (24) vorgeordnet ist.

10. Vorrichtung nach Anspruch 9, dadurch gekennzeichnet, daß die Schleuse (24) von zwei beabstandeten Verschlußorganen (25, 26) gebildet ist, die Verschlußorgane (25, 26) Verschlußelemente (30) aufweisen, die in Schließstellung nur den Durchtritt des Kabels (23) und in der Offenstellung den Durchtritt auch der Schwimmkörper (36) erlauben.

11. Vorrichtung nach Anspruch 10, dadurch gekennzeichnet, daß die Verschlußelemente (30) Schieber sind, die eine Ausnehmung (35) aufweisen, deren Breite etwas größer ist als der Durchmesser des Kabels (23).

12. Vorrichtung nach einem der Ansprüche 9 bis 11, dadurch gekennzeichnet, daß das Kabelkanalrohr (20) von einem Ringkanal (21) umgeben ist, der über eine Reihe von in Umfangsrichtung beabstandeten Öffnungen, vorzugsweise schräg in die Strömungsrichtung weisenden Düsen, mit dem Kabelkanalrohr (20) verbunden ist und der Ringkanal (21) mit einem seitlich abgehenden Wasserzuführrohr (22) verbunden ist.

## Claims

1. A method for inserting a cable, in particular an underwater cable into a cable channel pipe, in which floating bodies are removably attached in distances to the cable, wherein the diameter of the bodies is smaller than the inner diameter of the cable channel pipe, and in which a water flow is effected through the cable channel pipe, whereby the cable is conveyed through the cable channel pipe by friction with the water flow.

2. The method according to claim 1, characterized in that the cable is introduced in the water flow through an annular seal.

3. The method according to claim 2, characterized in that an additional conveying force is exerted on the cable acting against the friction caused by the annular seal.

4. The method according to one of claims 1 to 3, characterized in that the flow of water is approximately uniformly fed about the circumference of the cable in the cable channel pipe.

5. The method according to one of claims 1 to 4, characterized in that ball-shaped floating bodies (36) are attached to the cable.

6. The method of claim 5, characterized in that the ball-shaped bodies are provided with a recess for receiving the cable and that at least a screw is adjustable into the recess with its front end to secure the floating body to the cable.

7. The method of one of claims 1 to 6, characterized in that the floating bodies are made of plastic material.

8. The method of claim 7, characterized in that the floating bodies are provided with one or a plurality of internal cavities.

9. A device for conducting the method according to one of claims 1 to 8, characterized in that a sluice (24) is installed upstream of the cable channel pipe (20) to insert the cable (23) including the floating body (36).

10. The device of claim 9, characterized in that the sluice (24) is defined by a pair of shut-off members (25, 26) mounted in a distance, that the shut-off members (25, 26) are provided with shut-off elements (30) to permit the passage of the cable (23) in a closed position and permit as well the passage of the floating body (36) in the opening position.

11. The device of claim 10, characterized in that the shut-off elements (30) are slides having a recess (35) which width is somewhat larger than the diameter of the cable (23).

12. The device of one of claims 9 to 11, characterized in that the cable channel pipe (20) is surrounded by an annular passage (21) which is connected to the cable channel pipe (20) via a series of peripherally spaced openings, preferrably of nozzles which are inclined to the flow direction and that the annular passage 20 is connected to a lateral water supply tube (22).

## Revendications

1. Procédé d'introduction d'un câble, en particulier un câble immergé, dans une conduite de passage de câble, procédé dans lequel des flotteurs sont reliés de manière amovible au câble par endroits espacés, flotteurs dont le diamètre est moindre que le diamètre interne de la conduite de passage de câble, et dans lequel un courant d'eau est acheminé à travers la conduite de passage de câble en sorte que le câble est entraîné le long de la conduite de passage de câble par frottement avec le courant d'eau.

2. Procédé selon la revendication 1, caractérisé en ce que le câble à insérer est acheminé dans le courant d'eau à travers une garniture d'étanchéité annulaire.

3. Procédé selon la revendication 2, caractérisé en ce qu'une force de transport supplémentaire est exercée sur l'élément à l'encontre du frottement provoqué par la garniture d'étanchéité annulaire.

4. Procédé selon l'une quelconque des revendications 1 à 3, caractérisé en ce que le courant d'eau est acheminé dans la conduite de passage de câble de manière approximativement uniforme autour de la périphérie du câble.

5. Procédé selon l'une quelconque des revendications 1 à 4, caractérisé en ce que des flotteurs sphériques (36) sont reliés au câble.

6. Procédé selon la revendication 5, caractérisé en ce que les flotteurs sphériques présentent un évidement qui reçoit le câble, et au moins une vis peut être introduite par son extrémité frontale dans l'évidement pour fixer le flotteur au câble.

7. Procédé selon l'une quelconque desrevendications 1 à 6, caractérisé en ce que les flotteurs sont constitués de matière plastique.

8. Procédé selon la revendication 7, caractérisé en ce que les flotteurs présentent une ou plusieurs cavités.

9. Dispositif permettant de réaliser le procédé selon l'une quelconque des revendications 1 à 8, caractérisé en ce que, pour acheminer le câble (23) avec les flotteurs (36) dans la conduite de passage de câble (20), on agence en amont une écluse (24).

10. Dispositif selon la revendication 9, caractérisé en ce que l'écluse (24) est formée de deux organes d'obturation espacés (25, 26) qui présentent des éléments d'obturation (30) qui permettent, en position de fermeture, uniquement le passage du câble (23) et, en position d'ouverture, le passage également des flotteurs (36).

11. Dispositif selon la revendication 10, caractérisé en ce que les éléments d'obturation (30) sont des vannes qui présentent un évidement (35) dont la largeur est un peu plus grande que le diamètre du câble (23).

12. Dispositif selon l'une quelconque des revendications 9 à 11, caractérisé en ce que la conduite de passage de câble (20) est entourée par un canal annulaire (21) qui est relié à la conduite de passage de câble (20), par une série d'ouvertures espacées dans la direction périphérique, de préférence des buses inclinées dans la direction de l'écoulement, et le canal annulaire (21) est relié à une conduite d'alimentation en eau dépassant latéralement (22).

# Fig. 1

Fig. 2

Fig. 3

Fig. 4

Fig. 5